# EUROPEAN PATENT SPECIFICATION

(11) **EP 3 653 168 B1**
(45) Date of publication and mention of the grant of the patent: **05.05.2021**
(21) Application number: 18206460.0
(22) Date of filing: 15.11.2018
(51) Int. Cl.: A61C 13/00

(54) **METHOD FOR PRODUCING CERAMIC DENTAL PROSTHESIS PARTS, CAD/CAM MACHINING STATION AND COMPUTER PROGRAM**
VERFAHREN ZUR HERSTELLUNG VON KERAMISCHEN ZAHNPROTHESENTEILEN, CAD/CAM-BEARBEITUNGSSTATION UND COMPUTERPROGRAMM
PROCÉDÉ DE PRODUCTION DE PIÈCES DE PROTHÈSE DENTAIRE EN CÉRAMIQUE, STATION D'USINAGE CAD/CAM ET PROGRAMME INFORMATIQUE

(43) Date of publication of application: 20.05.2020
(73) Proprietor: SIRONA Dental Systems GmbH, 64625 Bensheim (DE); DENTSPLY SIRONA Inc., York, PA 17401 (US)
(72) Inventor: SCHNEIDER, Hans-Christian, 64683 Einhausen (DE); SEIBERT, Helmut, 64665 Alsbach-Hähnlein (DE); HASENZAHL, Thomas, 64297 Darmstadt (DE); MORGENROTH, Mathias, 64285 Darmstadt (DE)
(74) Representative: Özer, Alpdeniz

(56) References cited:
- DE-A1-102005 039 010
- DE-A1-102009 011 442
- US-A1- 2017 056 137

## Description

The invention relates to a method for producing ceramic dental prosthesis parts by way of a CAD/CAM machining station, to a corresponding CAD/CAM machining station and to a computer program for controlling the CAD/CAM machining station.

A method for producing dental restorations is known from WO2004/086999A1, in which disk-shaped blanks are processed, which are present in an unsintered form or in a form in which they have not yet undergone final sintering. According to this previously known method, it is not possible to process final-strength blanks.

DE 10 2009 011442 A1 discloses a method for the production of dental prostheses.

In contrast, it is the object of the invention to create an improved method for producing ceramic dental prosthesis parts and a corresponding CAD/CAM machining station, a computer program.

The object underlying the invention is achieved by the features of the independent claims 1, 12 and 18. Embodiments of the invention are described in the dependent claims.

A "dental prosthesis part" here shall be understood to mean a ceramic dental prosthesis, such as a crown or a bridge, for the restorative dental medicine field.

A "disk-shaped ceramic blank" here shall, in particular, be understood to mean a so-called round blank, which, for example, can have a cylindrical, and in particular a circular cylindrical, a puck-shaped or a rectangular contour or a contour resembling the human jaw (see https://www.amanngirrbach.com/index.php?id= 23&news= UWC9bNZ4&no_cache=1&L=2). A "disk-shaped ceramic blank" as understood herein also encompasses a disk-shaped, plate-shaped or slice-shaped ceramic blank that may have a round, rectangular, triangular or other polygonal or curved or ellipsoid circumference and which is configured to be releasably held by a mounting device on its circumference by a press and/or form fit.

In contrast to block-shaped blanks, such as are known from DE 20 2008 018 342 U1 and EP 2 016 922 B1, for example, where they are referred to as "sub-blanks 84", such a disk-shaped ceramic blank according to the invention does not require a holder attached to the blank (shown as "supports 86" in EP 2 016 922 B1), since the blank is intended to be surrounded on the circumference thereof by the mounting device of a CAD/CAM machining station.

Compared to a block-shaped blank, the special feature of a disk-shaped blank is that a disk-shaped blank is surrounded on the entire circumference, or on almost the entire circumference, in a mounting device for machining purposes, and more particularly in contrast to block-shaped blanks, which are generally only attached on one side, for example by an adhesively attached block holder, during machining.

The use of a disk-shaped blank is especially advantageous for long-span prostheses, such as for dental bridges, since the disadvantages of block-shaped blanks are avoided, in which the mechanical lever is accordingly high, so that a one-sided attachment by a block holder, for example by way of adhesive, is disadvantageous.

In the case of a "disk-shaped ceramic blank," the ratio of the thickness of the blank to the diameter thereof is considerably different from 1:1, in contrast to block-shaped blanks, and the ratio of the thickness of the blank to the diameter thereof may range between 1:10 and 1:4, for example. The diameter is at least more than 40 mm, preferably more than 90 mm, and preferably less than 200 mm, and in particular between 95 mm and 110 mm. Such blanks are holderless, which is to say they do not have a holder attached to the blank, such as by adhesive bonding, but the blanks are intended to attached along the circumference thereof in a mounting device, preferably in a force-fit and/or form-locked manner. Mounting may take place along the entire circumference, or it may be interrupted by recesses along the circumference.

Round blanks having a standard format with a diameter of 98.5 mm and a thickness of 12, 14, 18 or 25 mm, for example, are commercially available in a variety of ceramic materials. However, a round blank may also have a different diameter, such as 105 mm. A round blank may also have a non-circular shape, such as a contour that is based on the shape of the human maxilla.

A "CAD/CAM machining station" herein shall, in particular, be understood to mean a program-controlled machine for machining a blank so as to produce a dental prosthesis part.

A "grinding tool" shall, in particular, be understood to mean a tool for the CAD/CAM machining station which, in contrast to a milling cutter, does not include a defined rotating cutting edge, but an undefined blade, which is formed by an abrasive working surface. For example, the working surface may include abrasive particles, such as diamonds having a certain grain size, whereby the undefined blade is formed.

Embodiments of the invention are particularly advantageous since the production of ceramic dental prosthesis parts directly from the final-strength blank is made possible. In contrast to the state of the art, no shrinkage that would otherwise result due to final sintering has to be taken into consideration in the generation of the CAD file, which specifies the dimensions of a dental prosthesis part to be produced, but the CAD file can directly indicate the desired final dimensions of the dental prosthesis part to be produced.

The machining complexity is also reduced in that a work step, after the dental prosthesis parts have been machined from the blank, is eliminated, namely the final sintering that is otherwise required. This is advantageous both for applications in laboratories and in so-called chairside applications.

Another advantage is that the use of machining by grinding, instead of milling, allows dental prosthesis parts to be produced which have improved precision in terms of the geometric dimensions thereof, and particularly low surface roughness.

It may be furthermore of advantage in this regard that, as a result of the elimination of the sintering process after machining, a potential source of errors is eliminated, such as an incorrect shrinkage factor. Moreover, embodiments of the invention are particularly advantageous since this can take place without a tool change, which is to say using only the grinding tool.

According to embodiments of the invention, machining by grinding, instead of milling, of the final-strength ceramic blank is made possible in that an initial contact between the blank and the grinding tool is established in such a way that, due to the rotation of the grinding tool about the longitudinal axis thereof, a movement relative to the blank is carried out on the entire contact surface between the grinding tool and the blank.

In other words, the grinding tool is initially moved to the blank in such a way that a contact surface is formed between the abrasive working surface and the blank, wherein the alignment of the longitudinal axis of the grinding tool about which this tool rotates is selected, relative to the blank, in such a way that every point of the abrasive working surface carries out a relative movement with respect to the blank on the contact surface, whereby material is removed from the blank on the entire contact surface. This advantageously makes it possible to carry out a machining operation of a final-strength ceramic blank using a grinding tool while incurring low wear.

According to embodiments of the invention, the geometry of the contact surface is selected in such a way that the same relative speed is achieved over the entire contact surface. In this way, particularly uniform removal, low tool wear, and high quality and precision of the produced surfaces are made possible.

According to one embodiment of the invention, the mounting device of the CAD/CAM machining station has a recess that is open toward the blank. The recess may be a groove extending in the axial direction, having a cross-section large enough to allow the grinding tool to be introduced into the groove. Designing the groove as small as possible has the advantage that the contact surface between the blank and the mounting device, and the attendant stability of the mount, are substantially not reduced, and the local surface pressure can be kept low.

According to one embodiment of the invention, multiple of the recesses may be distributed along the circumference of the mounting device so as to allow the grinding tool to be fed to the blank in corresponding multiple locations.

According to embodiments of the invention, the grinding tool is introduced into one of the recesses of the mounting device, and more particularly without making contact with the mounting device or the blank. Only after the grinding tool has been introduced in the axial direction as far as corresponds to the thickness of the blank, or the depth of the recess, is the grinding tool moved to the blank in the radial direction for the initial contact so as to start to machine the blank.

According to the invention, the blank is attached in the mounting device by way of an adapter, which can have an annular design. The at least one recess is not formed in the mounting device, but in the adapter. This has the advantage that a CAD/CAM machining station comprising a conventional mounting device can be used for the method according to the invention.

According to one embodiment, the adapter is made of a material, such as metal or plastic material, which allows the blank to be held sufficiently firmly in the mounting device.

According to one embodiment of the invention, the casing-side access of the grinding tool to the blank is implemented in that the blank has a radial flattened region, which provides a recess sufficient for a tool to engage on the casing side. Such a recess can be created during the production of the blank, for example during pressing of the ceramic, or subsequently by removing material from the casing region of the blank, for example by way of a surface grinding machine.

According to one embodiment of the invention, the blank has at least one recess, which extends across the entire thickness of the blank, so as to allow the grinding tool to be fed for the initial contact. Such a recess can, in turn, be implemented during the production of the blank by means of pressing or in a preprocessing step using machining techniques.

In the above-mentioned embodiments including a recess, the blank is likewise surrounded on the circumference, wherein the enclosure is interrupted in the region of each recess. The sum of these interruptions along the circumference is preferably substantially smaller than the length of the circumference, so that the stress introduced into the blank does not fluctuate excessively despite the interruptions along the circumference. For example, the sum of these interruptions is less than 80%, 60%, 40%, 30% or 20% of the circumference, wherein at least one of the recesses is sufficiently large for introducing the grinding tool without contact.

As an alternative, the at least one recess can also have a diameter that is smaller than that of the grinding tool. In this case, a machining operation is carried out when the grinding tool is introduced into the recess, wherein the rotational axis of the grinding tool extends through the recess, and preferably through the center thereof. In this way it is ensured that, even in this case, a relative movement relative to the blank is carried out on the entire contact surface between the grinding tool and the blank when the initial contact is established between the blank and the grinding tool, since the rotational axis (longitudinal axis) is aligned with the recess.

During the production of the blank, it is
- pressed,
- isostatically pressed,
- hot isostatically pressed, or hipped,
- cast and/or
- preground, premilled, preturned, or presintered.

Hipped (hot isostatically pressed) blanks are particularly advantageous since these are particularly hard and thus supply a quality dental prosthesis.

According to one embodiment of the invention, the blank is made of a final-strength dental ceramic, the blank being in particular feldspathic, feldspar-like, glass ceramic, in particular made of lithium disilicate glass ceramic, crystal ceramic, in particular made of aluminum oxide and/or zirconium oxide.

In a further aspect, the invention relates to a CAD/CAM machining station according to claim 12 comprising a control unit that is configured in such a way that, based on the rotation of the grinding tool about the longitudinal axis thereof, a relative movement relative to the blank is carried out on the entire contact surface between the grinding tool and the blank. Following this initial contact, the blank is further machined by the grinding tool, for example, along a precalculated trajectory, so as to produce the desired ceramic dental prosthesis parts.

In a further aspect, the invention relates to a computer program for a CAD/CAM machining station according to claim 18 for controlling the same accordingly. The computer program may be present on a memory medium, for example, in particular a data carrier, or the computer program may be kept available for downloading from a server, for example via the Internet. The computer program can be installed on the CAD/CAM machining station using a so-called firmware update, for example.

Embodiments of the invention will be described in more detail hereafter with reference to the drawings. In the drawings:
- FIG. 1: shows a block diagram of a CAD/CAM machining system comprising a CAD/CAM machining station and multiple CAD devices;
- FIG. 2: shows the CAD/CAM machining system according to FIG. 1 after the grinding tool has been introduced;
- FIG. 3: shows the CAD/CAM machining system according to FIGS. 1 and 2 after the initial contact between the blank and the grinding tool;
- FIG. 4a: shows a block diagram of a CAD/CAM machining system comprising edge-side feeding of the grinding tool;
- FIGS. 4b, 4c, 4d: show possible geometries of the mounting device, of an adapter or a casing of the blank;
- FIGS. 5a, 5b: show schematic diagrams of an end-face or lateral-side initial contact;
- FIG. 6: shows a block diagram of a CAD/CAM machining system including recesses of the blank on both sides;
- FIG. 7: shows a top view onto a blank including a through-hole or a cavity;
- FIG. 8: shows a top view onto a blank including a recess on the lateral surface or casing side thereof;
- FIG. 9: shows a block diagram of a CAD/CAM machining system including a blank, which has an eccentric through-hole;
- FIG. 10: shows a top view onto a blank having an eccentric through-hole and a marking;
- FIG. 11: shows a conical grinding tool; and
- FIGS. 12 to 17: show a spherical grinding tool.

Elements of the following embodiments that correspond to or are identical to each other are each denoted by the same reference numerals.

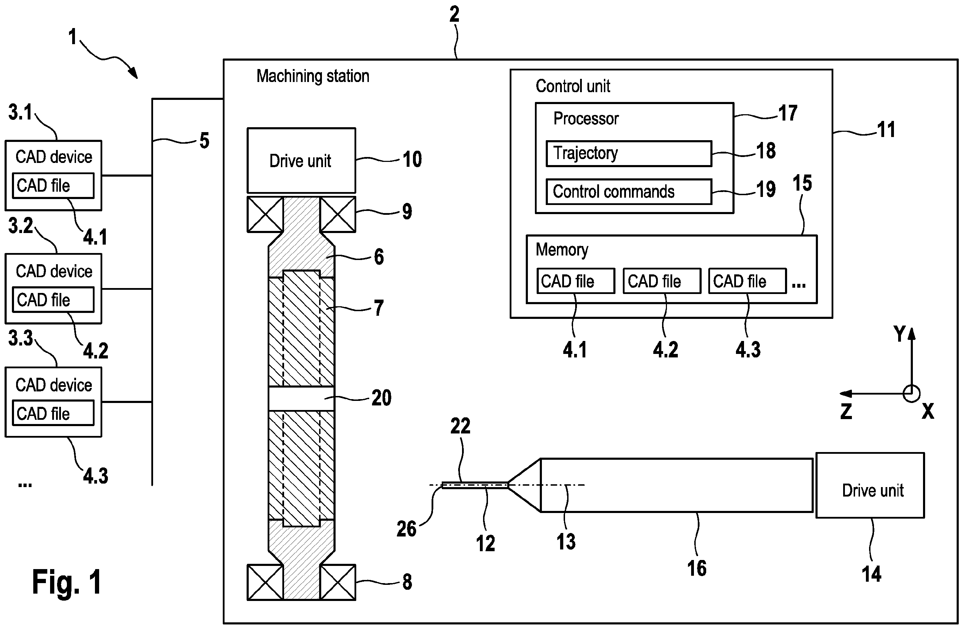

FIG. 1 shows a CAD/CAM machining system 1 comprising a CAD/CAM machining station 2 for producing ceramic dental prosthesis parts. The CAD/CAM machining system 1 comprises at least one CAD device 3.1 for generating a CAD file 4.1, which specifies the final dimensions of one or more of the dental prosthesis parts to be produced.

For example, the CAD device 3.1 includes a scanner for acquiring 3D measurement data from the patient; as an alternative, the 3D measurement data can be received in digital form from the dentist. The CAD device 3.1 is used to execute CAD software so as to generate the CAD file 4.1 for specifying the dental prosthesis part to be produced. Appropriate scanners are commercially available, such as inEosX5 from Dentsply Sirona.

The CAD file 4.1 can be transmitted to the machining station 2 via a communication network 5, such as the Internet. Further CAD devices 3.2, 3.3 etc., which essentially have the same design, can transmit the corresponding CAD files to the machining station 2 via the communication network 5 for the generation of further CAD files 4.2, 4.3 etc., for specifying the final dimensions of further dental prosthesis parts.

Not in line with the invention, the machining station 2 comprises a mounting device 6 for attaching a blank 7 in the machining station 2. For example, the mounting device 6 is designed in such a way that the blank 7 is clamped on the circumference thereof into the mounting device 6. The mounting device 6 is held rotatable about the Y axis by bearings 8, 9. The rotation about the Y axis is effectuated by a drive unit 10 of the mounting device 6, which can be controlled by a control unit 11. In addition to the rotatory alignment of the mounting device 6 about the Y axis, the drive unit 10 can be designed to carry out a positioning within the XY plane, for which purpose the drive unit 10 can be accordingly controlled by the control unit 11.

The machining station 2 furthermore comprises a spindle motor 16 for receiving a grinding tool 12, which has a pin shape in the embodiment described here. The spindle motor 16 is used to rotate the grinding tool 12 about the longitudinal axis 13. In the embodiment described here, the spindle motor 16 can be positioned relative to the mounting device 6 by a further drive unit 14, for which purpose the drive unit 14 can be controlled by the control unit 11. For example, the spindle motor 16 can position the drive unit 14 in all three spatial directions X, Y and Z.

The control unit 11 of the machining station 2 comprises at least one electronic memory 15 for storing the CAD files 4.1, 4.2, 4.3 etc. received from the CAD devices 3.1, 3.2, 3.3 etc.

The control unit 11 furthermore comprises at least one microprocessor 17 for executing a computer program, which includes the program components 18 and 19, for example.

The program component 18 is used to calculate a trajectory from the CAD files 4.1, 4.2, 4.3 etc., along which the grinding tool 12 has to machine the blank 7 to produce the specified dental prosthesis parts.

The program component 19 generates control commands for the drive units 10 and 14, and also for the spindle motor 16, so as to machine the blank 7 in keeping with the trajectory calculated by the program component 18.

In the embodiment described here, the blank 7 has a through-hole 20, which is designed in such a way that the grinding tool 12 can be introduced entirely into the through-hole 20 in the axial direction, which is to say along the Z axis here, without making contact with the blank 7. For example, the through-hole 20 has a circular cylindrical shape having a diameter that is larger than the diameter of the grinding tool 12. Other geometries are also possible.

For example, the through-hole 20 can have a shape that is not large enough to receive the grinding tool 12 such that abrasive grinding action occurs when the grinding tool is introduced into the through-hole.

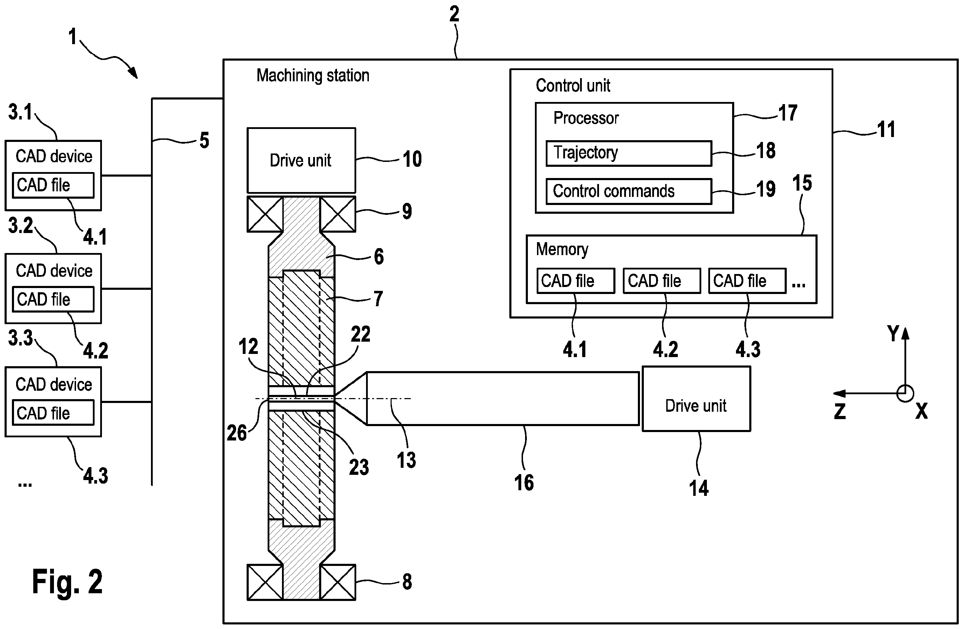

FIG. 2 shows the CAD/CAM machining system 1 after the trajectory and control commands have been calculated by the computer program, and after the grinding tool 12 has been fed to the blank 7, in that the blank 7 and the grinding tool 12 have been displaced relative to one another by the drive units 10 and/or 14 in such a way that the grinding tool 12 has been entirely introduced into the through-hole 12 without making contact therewith. It is irrelevant whether the spindle motor 16 is already switched on to rotate the grinding tool 12 about the longitudinal axis 13.

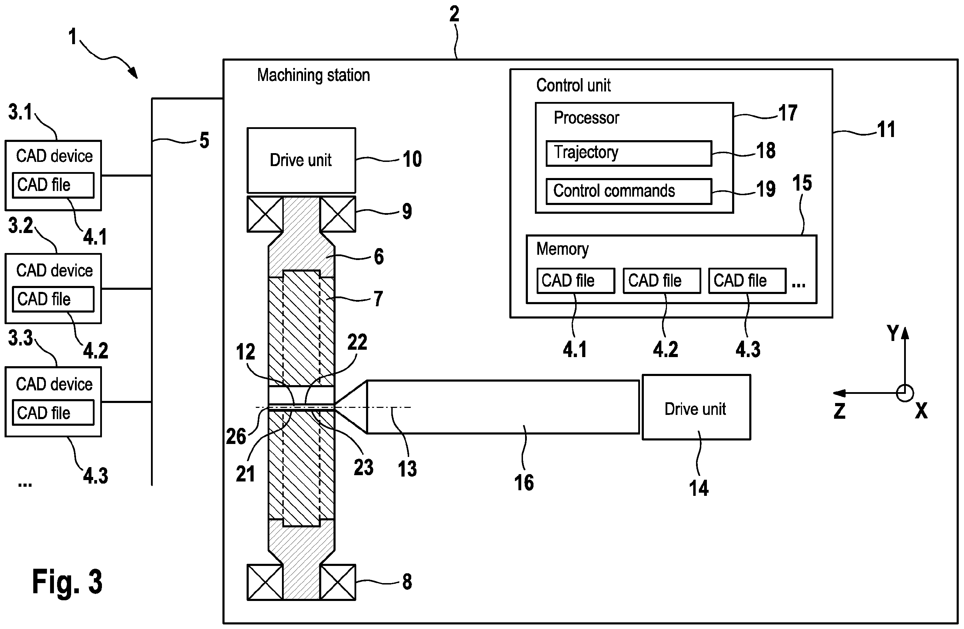

FIG. 3 shows the CAD/CAM machining system 1 after another relative movement has been carried out, starting with the relative position of the blank 7 and the grinding tool 12 shown in FIG. 2, and more particularly by control of the drive units 10 and/or 14 so as to establish initial contact between the blank 7 and the grinding tool 12. For this purpose, the grinding tool 12 is displaced in the y direction perpendicular to the axial edge 23 of the through-hole 20 until the grinding tool makes contact with the through-hole 20 on a contact surface 21. The grinding tool 12 is then rotated about the longitudinal axis 13 thereof by the spindle motor 16. The grinding tool 12 has a lateral surface 22, which includes abrasive elements, such as diamonds having a certain grain size, whereby the material on the contact surface 21 is removed. No load is applied to the end face 26 of the grinding tool 12.

The initial contact between the blank 7 and the grinding tool 12 here thus occurs in that the lateral surface 22 of the grinding tool 12 is displaced perpendicularly, which is to say in the y direction, for example, with respect to an edge 23 of the through-hole 12 extending axially, which is to say in the Z direction, so that the lateral surface 22 makes contact with the edge 23 along the entire thickness extension in the Z direction when this initial contact is established, thereby resulting in the contact surface 21.

The rotation of the lateral surface 22 about the longitudinal axis 13 results in a relative movement of the abrasive elements of the grinding tool 12 along the entire contact surface, whereby material is removed from the blank 7 along the entire contact surface 21 at essentially the same relative speed.

Proceeding from this initial contact, the control unit 11 then controls the drive units 10 and/or 14 by way of the control commands in such a way that the dental prosthesis parts specified in the CAD files 4.1, 4.2, 4.3, etc. are machined from the blank 7. It is particularly advantageous here that this takes place with particularly high precision and, due to machining by grinding, with a particularly high surface quality, and without necessitating a tool change or subsequent sintering. The dental prosthesis parts thus produced can be used directly by a dentist on a patient, without a further processing step.

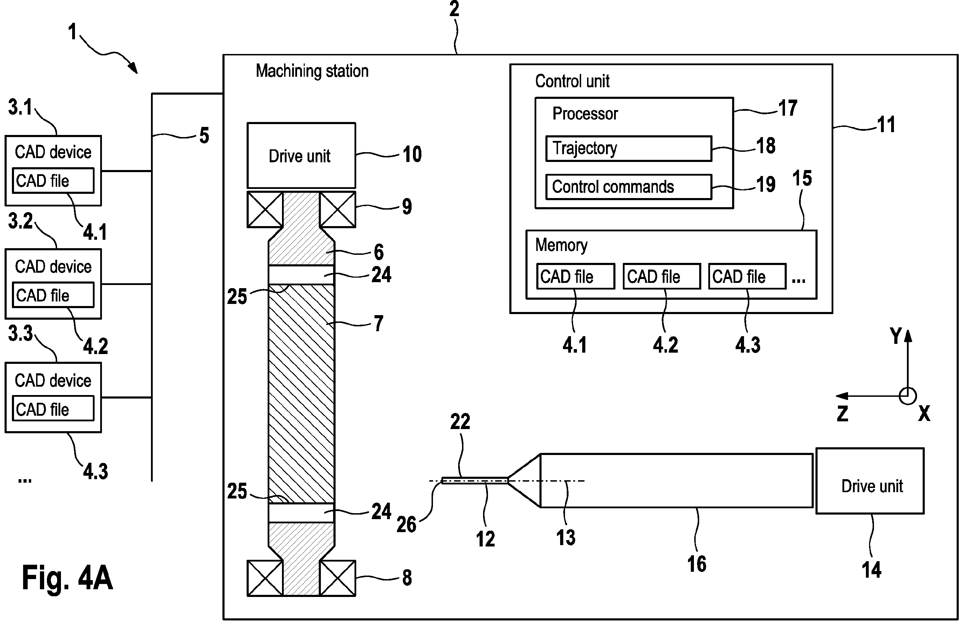

FIG. 4A shows an embodiment of the CAD/CAM machining system 1 in which the mounting device 6 comprises recesses 24. These recesses 24 make the edge 25 of the blank 7 accessible to the grinding tool 12, analogously to FIGS. 1, 2 and 3. Instead of being introduced into a through-hole 20 of the blank 7, which in the embodiment described here does not need to be present, the grinding tool 12 is thus introduced into one of the recesses 24 of the mounting device 6, so as to then be moved with the lateral surface 22 against the edge 25 of the blank 7 to form the contact surface there, analogously to the contact surface 21.

This embodiment has the advantage that standard blanks having no through-hole 20 can be used.

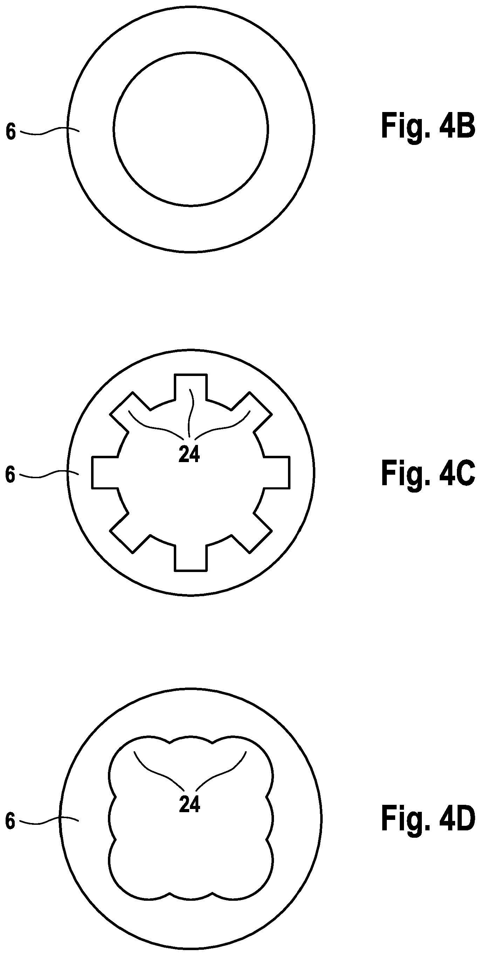

FIG. 4B shows the geometry of an annular mounting device 6 having no recess 24, such as they may be used in the embodiments according to FIGS. 1, 2 and 3, for example.

FIG. 4C shows the geometry of a mounting device 6 including multiple recesses 24, which are uniformly distributed on the circumference of the mounting device and each provide a radial access to the edge 25 of a blank 7 clamped in the mounting device 6.

FIG. 4D shows an alternative embodiment of the mounting device 6 according to FIG. 4C, in which the four recesses 24 are not uniformly arranged, but have a curve shape.

Instead of the mounting device 6, the adapter or a casing of the blank 7 has, in accordance with the invention, a geometry according to FIGS. 4A, 4C or 4D.

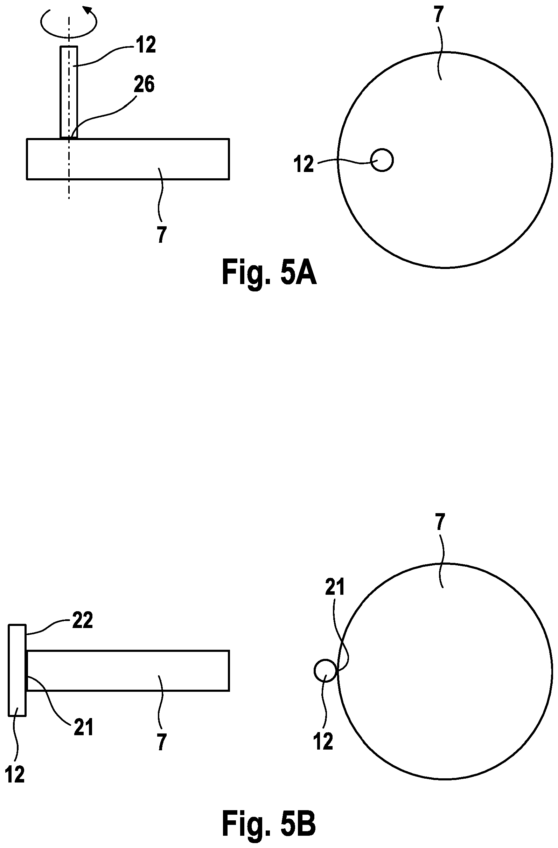

FIGS. 5A and 5B illustrate the advantage of an initial contact between the blank and the lateral surface 22 once again. If the initial contact is not established with the lateral surface 22, but with the end face 26 of the grinding tool 12, as is shown in FIG. 5A, no relative movement takes place at the center of rotation about the longitudinal axis 13 at the contact point between the grinding tool 12 and the blank 7, so that material can hardly be removed from the blank 7 by the grinding tool 12 or only with high wear.

If, in contrast, the initial contact takes place between the blank 7 and the lateral surface 22 of the grinding tool 12, as is the case in the embodiments according to FIGS. 1 to 4, a contact surface 21 is formed, on which the abrasive elements carry out a relative movement with respect to the blank 7, whereby material removal that is gentle on the tool is made possible with a high surface quality and high precision.

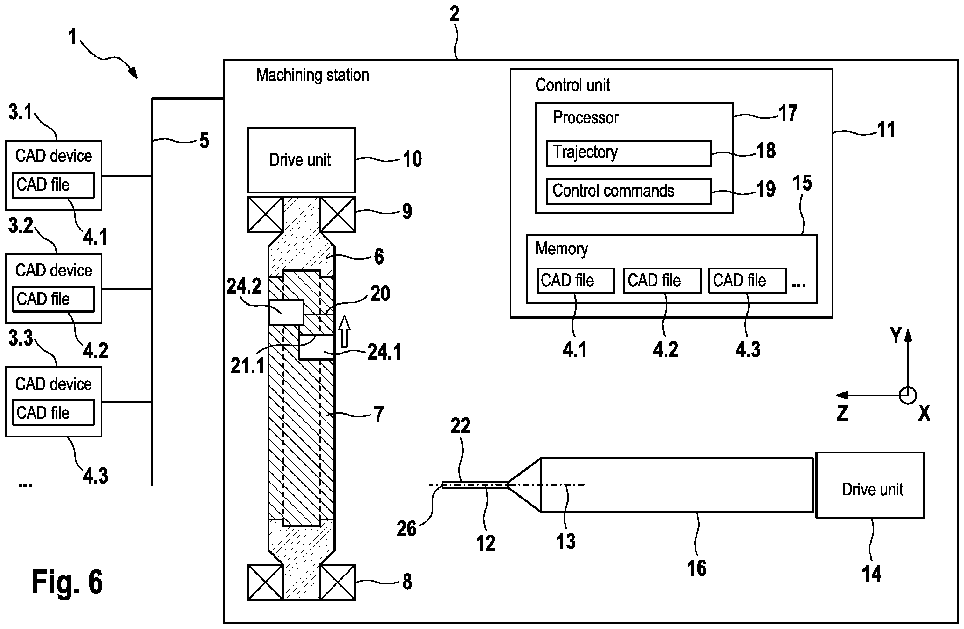

FIG. 6 shows a further embodiment of the CAD/CAM machining system 1 for an embodiment of the blank 7 that includes two recesses 24.1 and 24.2.

The recesses 24.1 and 24.2 can each be designed as blind holes. The depths of these blind holes, in sum, amount to at least the thickness of the blank 7. In this way, machining as follows is made possible:
1. First, the grinding tool 12 is introduced into the recess 24.1 and then forms an initial contact surface 21.1 on an edge of the recess 24.1.
2. By displacing the grinding tool 12 in the direction toward the recess 24.2, which is the Y direction here, the through-hole 20 is created, having the stepped geometry shown in FIG. 6.
3. As soon as the recesses 24.1 and 24.2 have been connected to one another in this manner, the grinding tool 12 can be introduced into the resulting through-hole 20, and further machining can take place analogously to the embodiment according to FIGS. 1, 2, 3.

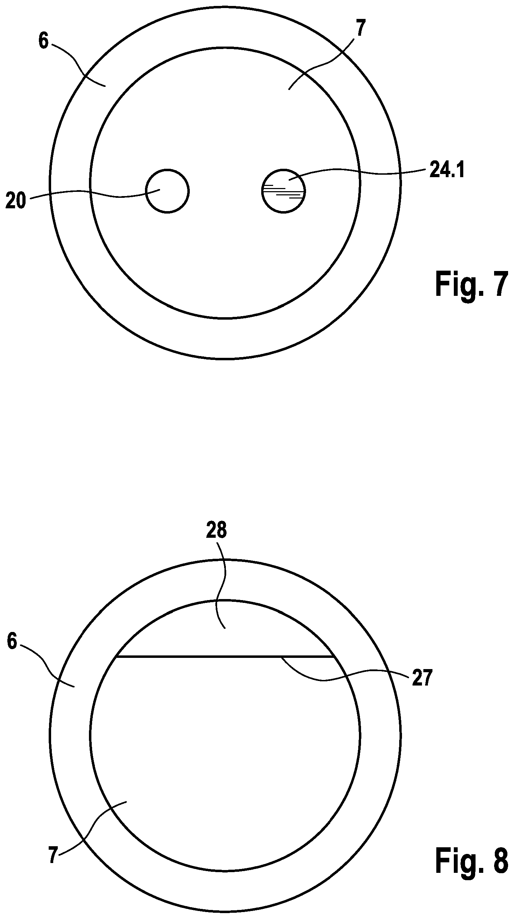

FIG. 7 shows a top view onto a blank 7, which is located in a mounting device 6. The blank 7 can have a through-hole 20, which is formed during the production of the blank 7, for example by being pressed into the blank 7. As an alternative, the blank 7 can also be produced without the through-hole 20. The through-hole 20 is then provided subsequently, after the blank 7 has been produced, by way of milling, and in particular drilling.

As an alternative to the through-hole 20, cavities that are open at the top can be formed on or milled into opposing sides of the blank 7, which is to say recesses 24.1 and 24.2 (see FIG. 6).

FIG. 8 shows a blank 7 in the mounting device 6, wherein the blank 7 on the edge 27 thereof has a recess 28, which forms a space between the blank 7 and the mounting device 8. In this embodiment, the edge 27 of the blank 7 is accessible in the axial direction via this space, via which the grinding tool 12 can be moved to the blank 7 for the initial contact.

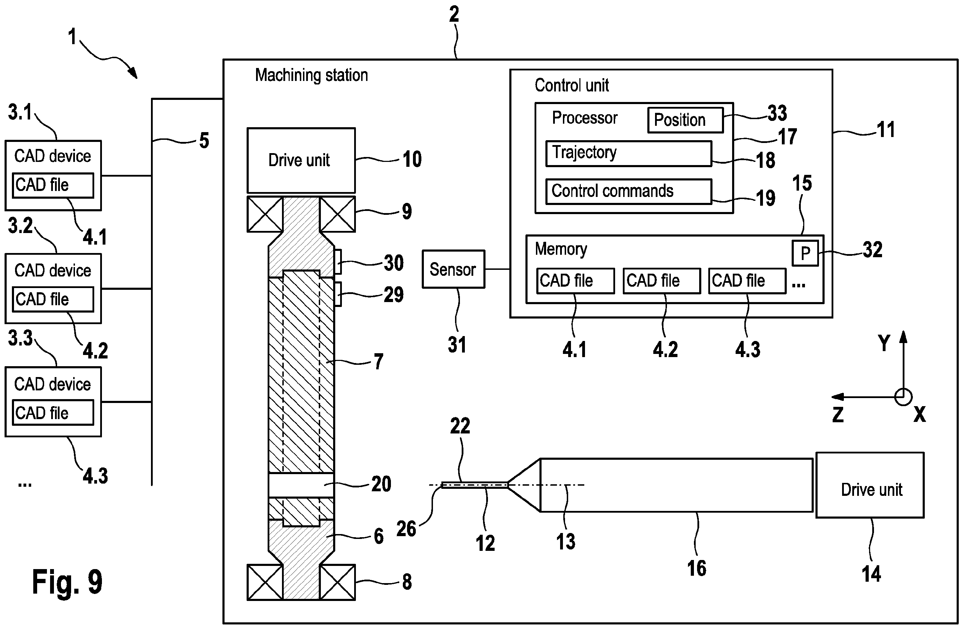

FIG. 9 shows a CAD-CAM machining system 1 including a blank 7, which has an eccentric through-hole 20. A marking 29 can be provided on or in the blank 7, and a corresponding marking 30 can be provided on or in the mounting device 6, so as to define the position of the through-hole 20 relative to the mounting device 6. When the blank 7 is clamped in the mounting device 6, a user aligns the markings 29 and 30 with one another, so that the through-hole assumes a predetermined position P, which can then be used for the movement by the control unit 11.

As an alternative or in addition, the control unit 11 can automatically detect the position P of the through-hole 20 relative to the mounting device 6. For this purpose, the machining station 2 comprises a sensor 31, such as an optical sensor, which detects the position P of the through-hole 20. Appropriate data 32 indicating this position P is then stored in the memory 15. The position P can be ascertained and the data 32 can be stored in that the microprocessor 17 executes a program component 33. The program components 18 and/or 19 then calculate the trajectory and generate the control commands by taking this position P into consideration, which specifies the starting point of the trajectory. As an alternative or in addition, the sensor can ascertain the position of the marking 29, and thus, indirectly, also the position of the through-hole.

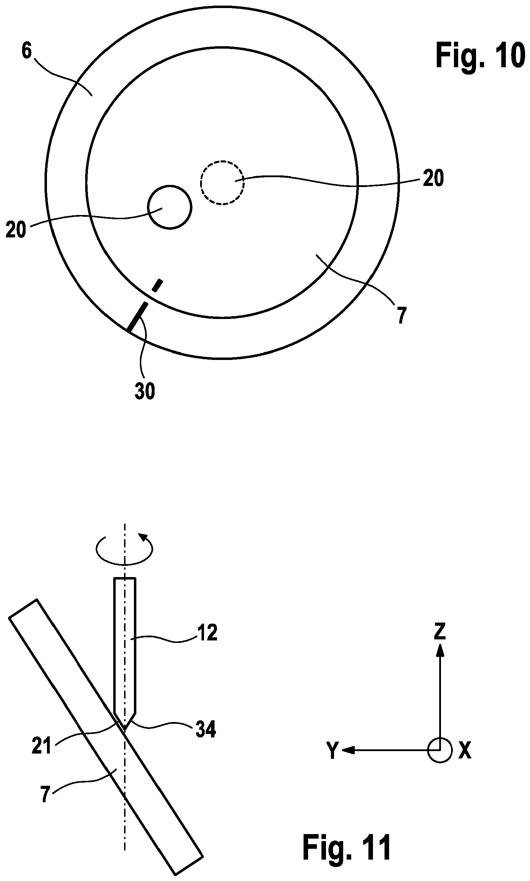

FIG. 10 shows the blank 7 according to FIG. 9 in a top view.

According to a further embodiment, the through-hole 20 can also extend axially through the center of a cylindrical disk-shaped blank 7, so that the markings 29, 30 can then be dispensed with. This is illustrated in FIG. 10 by dotted lines.

FIG. 11 shows a grinding tool 12 having a cone 34 is used, instead of a cylindrical grinding tool 12. In this embodiment, no recesses, such as a through-hole 20, are necessary, since the desired contact surface, which is also shown in FIG. 11, can be created based on the conical shape.

For this purpose, the blank 7 and the conical surface 34 of the grinding tool 12 are positioned by the control unit 11 relative to one another at an angle setting in such a way that the initial contact with the conical surface 34 is formed on the surface of the blank 7, so that the contact surface 21 results there. The angle setting is made relative to the center of rotation of the grinding tool. By a relative feed of the blank 7 and the grinding tool 12 in the z direction, a through-hole 20 through the blank 7 can thus be created, proceeding from which further machining along the trajectory then takes place. In addition to the feed in the z direction, optionally an feed component may exist in the x and/or y directions, which preferably are each smaller than the feed in the z direction.

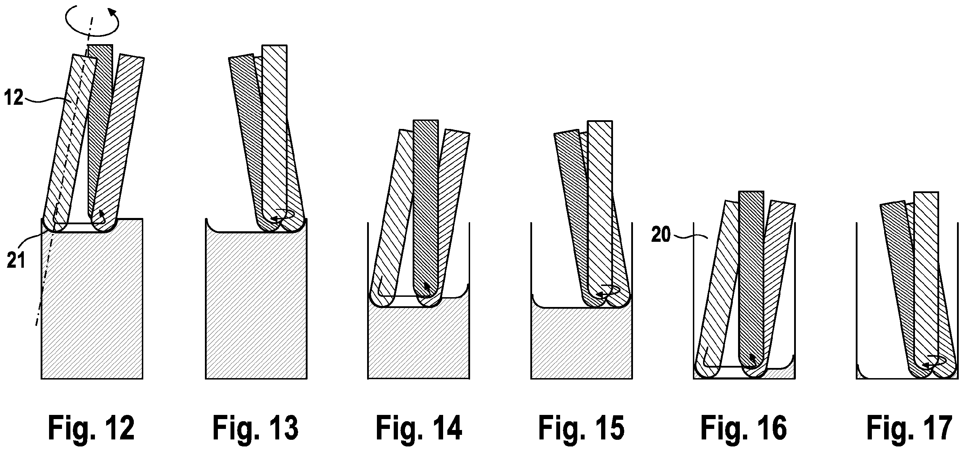

A grinding tool having a truncated cone is used instead of a conical grinding tool, wherein the initial contact surface 21 is not formed with the top surface, but the lateral surface of the truncated cone, so that again a relative movement of the abrasive particles takes place on the entire contact FIGS. 12 to 17 show a grinding tool 12 having a spherical working surface is used. FIGS. 12 to 17 show the creation of a through-hole 20 in the blank 7.

The initial contact is established here in that the grinding tool is not placed at a right angle, but at an incline to the surface normal of the blank 7 onto the surface thereof. This ensures that each point of the contact surface 21 carries out a relative movement with respect to the abrasive particles on the spherical working surface of the grinding tool 12.

The grinding tool 12 is then moved back and forth in a rocking motion within the contour of the through-hole to be created, wherein the grinding tool 12 is raised when it reaches a position, during this back and forth movement, at which it is situated perpendicularly to the blank, as is shown in FIGS. 12 to 17. By raising the grinding tool 12 in the aforementioned position, it is avoided that a contact surface is briefly formed, at the center of rotation of which no relative movement exists. The formation of such a contact surface is avoided in that the control unit 11 slightly raises the grinding tool 12 during the back and forth movement, by appropriate control of the drive units 10 and/or 14.

### List of reference numerals

- 1: CAD/CAM machining system
- 2: CAD/CAM machining station
- 3.1: CAD device
- 3.2: CAD device
- 3.3: CAD device
- 4.1: CAD file
- 4.2: CAD file
- 4.3: CAD file
- 5: communication network
- 6: mounting device
- 7: blank
- 8: bearing
- 9: bearing
- 10: drive unit
- 11: control unit
- 12: grinding tool
- 13: longitudinal axis
- 14: drive unit
- 15: memory
- 16: spindle motor
- 17: microprocessor
- 18: program component
- 19: program component
- 20: through-hole
- 21: contact surface
- 22: lateral surface
- 23: edge
- 24: recess
- 25: edge
- 26: end face
- 24.1: recess
- 24.2: recess
- 27: edge
- 28: recess
- 29: marking
- 30: marking
- 31: sensor
- 32: data
- 33: program component
- 34: conical surface

### List of reference numerals

- 1: CAD/CAM machining system
- 2: CAD/CAM machining station
- 3.1: CAD device
- 3.2: CAD device
- 3.3: CAD device
- 4.1: CAD file
- 4.2: CAD file
- 4.3: CAD file
- 5: communication network
- 6: mounting device
- 7: blank
- 8: bearing
- 9: bearing
- 10: drive unit
- 11: control unit
- 12: grinding tool
- 13: longitudinal axis
- 14: drive unit
- 15: memory
- 16: spindle motor
- 17: microprocessor
- 18: program component
- 19: program component
- 20: through-hole
- 21: contact surface
- 22: lateral surface
- 23: edge
- 24: recess
- 25: edge
- 26: end face
- 24.1: recess
- 24.2: recess
- 27: edge
- 28: recess
- 29: marking
- 30: marking
- 31: sensor
- 32: data
- 33: program component
- 34: conical surface

## Claims

1. A method for producing ceramic dental prosthesis parts by way of a CAD/CAM machining station (2), comprising the following steps:
- providing a disk-shaped ceramic blank (7);
- attaching the blank in a mounting device (6) of the CAD/CAM machining station so that the blank is surrounded on the circumference thereof;
- controlling the CAD/CAM machining station for establishing an initial contact between the blank and the grinding tool in such a way that, due to the rotation of the grinding tool about the longitudinal axis (13) thereof, the entire contact surface (21) between the grinding tool and the blank has relative movement; and
- machining the blank by way of the rotating grinding tool, proceeding from the initial contact, to produce the ceramic dental prosthesis parts,
**characterized in that**
the blank is attached in the mounting device by way of an adapter, which includes at least one recess that is open toward the blank, the grinding tool being introduced into the recess for feeding the grinding tool to the blank and being moved to the blank through the opening of the recess for the initial contact.

2. The method according to claim 1, **characterized in that** the blank has the final strength.

3. The method according to claim 1 or 2, wherein the mounting device includes at least one recess (24), which is open toward the blank, the grinding tool being introduced into the recess for feeding the grinding tool to the blank and being moved to the blank through the opening of the recess for the initial contact.

4. The method according to any one of the preceding claims, wherein the blank is attached in the mounting device by way of an adapter, which is made of a material that is softer than the ceramic blank, and in particular made of wood or a plastic material, the grinding tool being introduced into the adapter, and the grinding tool being moved through the adapter to the blank for the initial contact with the blank.

5. The method according to any one of the preceding claims, wherein the blank includes at least one recess (28), which extends across the entire thickness of the blank, the grinding tool being introduced into the recess for feeding the grinding tool to the blank and then being moved to the blank for the initial contact.

6. The method according to any one of the preceding claims, wherein the blank includes at least one recess (24.1, 24.2) on opposite sides of the blank, the depths of the recesses in sum corresponding at least to the thickness of the blank.

7. The method according to any one of the preceding claims, wherein the initial contact between the grinding tool and the blank moves out of the center of rotation of the grinding tool as a result of an angle setting of the disk-shaped blank.

8. The method according to claim 7, wherein a through-hole is created by displacing the grinding tool in the direction of the height of the disk-shaped blank.

9. The method according to claim 7 or 8, wherein a through-hole is created by displacing the grinding tool in a gyroscopic motion within the disk-shaped blank.

10. The method according to claim 7, 8 or 9, wherein the grinding tool is moved with a rocking motion relative to the blank, the grinding tool being raised relative to the blank when passing through the center of rotation.

11. The method according to any one of the preceding claims, wherein the CAD/CAM machining station receives a CAD file for the dental prosthesis parts to be produced which specifies the final dimensions of the respective dental prosthesis part, and the blank is machined in each case to the final dimensions specified in the CAD files.

12. A CAD/CAM machining station comprising a mounting device (6) for a disk-shaped blank (7), a grinding tool (12) and a control unit (11), which is configured to carry out the following steps:
- controlling the CAD/CAM machining station for establishing a contact between the blank and the grinding tool in such a way that, due to the rotation of the grinding tool about the longitudinal axis (13) thereof, the entire contact surface (21) between the grinding tool and the blank has relative movement; and
- machining the blank by way of the rotating grinding tool, proceeding from the initial contact, to produce ceramic dental prosthesis parts,
**characterized in that**
mounting device (6) comprises an adapter, wherein the blank can be attached in the mounting device by way of the adapter, which includes at least one recess that is open toward the blank, the grinding tool being introduced into the recess for feeding the grinding tool to the blank and being moved to the blank through the opening of the recess for the initial contact.

13. The CAD/CAM machining station according to claim 12, wherein the mounting device includes at least one recess (24), which is open toward the blank, the control unit being configured in such a way that the grinding tool is introduced into the recess for the initial feeding and moved to the blank through the opening of the recess for the initial contact.

14. The CAD/CAM machining station according to claim 12 or 13, comprising a memory (15) in which a position of a recess is stored, the control unit being configured in such a way that the grinding tool enters the blank at the position of the recess.

15. The CAD/CAM machining station according to claim 12, 13 or 14, comprising an optical sensor (31) for sensing the position of the blank and/or a recess relative to the mounting device, the control unit being configured in such a way that the grinding tool enters the blank at the position of the recess.

16. The CAD/CAM machining station according to any one of claims 13 to 16, wherein the adapter being made of a material that is softer than the ceramic blank, and in particular made of wood or plastic material, the control unit being configured in such a way that the grinding tool enters into the adapter for establishing the contact between the blank and the grinding tool.

17. A CAD/CAM machining system comprising a CAD/CAM machining station according to any one of claims 12 to 16 and a device (3) for generating a CAD file that specifies the final dimensions of the ceramic dental prosthesis parts to be produced.

18. A computer program comprising executable program instructions for execution by the control unit of a CAD/CAM machining station according to any one of claims 12 to 17.

## Patentansprüche

1. Verfahren zur Herstellung keramischer Zahnprothesenteile mittels einer CAD/CAM-Bearbeitungsstation (2), umfassend die folgenden Schritte:
- Bereitstellen eines scheibenförmigen Keramikrohlings (7);
- Anbringen des Rohlings in einer Montagevorrichtung (6) der CAD/CAM-Bearbeitungsstation, so dass der Rohling an seinem Umfang umschlossen ist;
- Steuern der CAD/CAM-Bearbeitungsstation zum Herstellen eines Anfangskontakts zwischen dem Rohling und dem Schleifwerkzeug derart, dass aufgrund der Drehung des Schleifwerkzeugs um seine Längsachse (13) die gesamte Kontaktfläche (21) zwischen dem Schleifwerkzeug und dem Rohling eine Relativbewegung aufweist; und
- Bearbeiten des Rohlings mittels des sich drehenden Schleifwerkzeugs ausgehend von dem Anfangskontakt, um die keramischen Zahnprothesenteile herzustellen,
**dadurch gekennzeichnet, dass**
der Rohling mittels eines Adapters in der Montagevorrichtung angebracht wird, der mindestens eine Aussparung umfasst, die zu dem Rohling hin offen ist, wobei das Schleifwerkzeug in die Aussparung eingebracht wird, um das Schleifwerkzeug dem Rohling zuzuführen, und für den Anfangskontakt durch die Öffnung der Aussparung zu dem Rohling bewegt wird.

2. Verfahren nach Anspruch 1, **dadurch gekennzeichnet, dass** der Rohling die endgültige Festigkeit aufweist.

3. Verfahren nach Anspruch 1 oder 2, wobei die Montagevorrichtung mindestens eine Aussparung (24) umfasst, die zu dem Rohling hin offen ist, wobei das Schleifwerkzeug in die Aussparung eingebracht wird, um das Schleifwerkzeug dem Rohling zuzuführen, und für den Anfangskontakt durch die Öffnung der Aussparung zu dem Rohling bewegt wird.

4. Verfahren nach einem der vorhergehenden Ansprüche, wobei der Rohling mittels eines Adapters in der Montagevorrichtung angebracht ist, der aus einem Material hergestellt ist, das weicher als der Keramikrohling ist, und insbesondere aus Holz oder einem Kunststoffmaterial hergestellt ist, wobei das Schleifwerkzeug in den Adapter eingebracht wird und das Schleifwerkzeug für den Anfangskontakt mit dem Rohling durch den Adapter zu dem Rohling bewegt wird.

5. Verfahren nach einem der vorhergehenden Ansprüche, wobei der Rohling mindestens eine Aussparung (28) umfasst, die sich über die gesamte Dicke des Rohlings erstreckt, wobei das Schleifwerkzeug in die Aussparung eingebracht wird, um das Schleifwerkzeug dem Rohling zuzuführen, und dann für den Anfangskontakt zu dem Rohling bewegt wird.

6. Verfahren nach einem der vorhergehenden Ansprüche, wobei der Rohling mindestens eine Aussparung (24.1, 24.2) auf gegenüberliegenden Seiten des Rohlings umfasst, wobei die Tiefen der Aussparungen in Summe mindestens der Dicke des Rohlings entsprechen.

7. Verfahren nach einem der vorhergehenden Ansprüche, wobei sich der Anfangskontakt zwischen dem Schleifwerkzeug und dem Rohling infolge einer Winkeleinstellung des scheibenförmigen Rohlings aus dem Drehpunkt des Schleifwerkzeugs herausbewegt.

8. Verfahren nach Anspruch 7, wobei ein Durchgangsloch durch Verschieben des Schleifwerkzeugs in Richtung der Höhe des scheibenförmigen Rohlings erzeugt wird.

9. Verfahren nach Anspruch 7 oder 8, wobei ein Durchgangsloch durch Verschieben des Schleifwerkzeugs in einer Kreiselbewegung innerhalb des scheibenförmigen Rohlings erzeugt wird.

10. Verfahren nach Anspruch 7, 8 oder 9, wobei das Schleifwerkzeug mit einer Schaukelbewegung relativ zu dem Rohling bewegt wird, wobei das Schleifwerkzeug relativ zu dem Rohling angehoben wird, wenn der Drehpunkt durchlaufen wird.

11. Verfahren nach einem der vorhergehenden Ansprüche, wobei die CAD/CAM-Bearbeitungsstation eine CAD-Datei für die herzustellenden Zahnprothesenteile empfängt, die die endgültigen Abmessungen des jeweiligen Zahnprothesenteils angibt, und der Rohling jeweils auf die in den CAD-Dateien angegebenen endgültigen Abmessungen hin bearbeitet wird.

12. CAD/CAM-Bearbeitungsstation, umfassend eine Montagevorrichtung (6) für einen scheibenförmigen Rohling (7), ein Schleifwerkzeug (12) und eine Steuereinheit (11), dazu konfiguriert, die folgenden Schritte auszuführen:
- Steuern der CAD/CAM-Bearbeitungsstation zum Herstellen eines Kontakts zwischen dem Rohling und dem Schleifwerkzeug derart, dass aufgrund der Drehung des Schleifwerkzeugs um seine Längsachse (13) die gesamte Kontaktfläche (21) zwischen dem Schleifwerkzeug und dem Rohling eine Relativbewegung aufweist; und
- Bearbeiten des Rohlings mittels des sich drehenden Schleifwerkzeugs ausgehend von dem Anfangskontakt, um die keramischen Zahnprothesenteile herzustellen,
**dadurch gekennzeichnet, dass**
die Montagevorrichtung (6) einen Adapter umfasst, wobei der Rohling mittels des Adapters in der Montagevorrichtung angebracht werden kann, der mindestens eine Aussparung umfasst, die zu dem Rohling hin offen ist, wobei das Schleifwerkzeug in die Aussparung eingebracht wird, um das Schleifwerkzeug dem Rohling zuzuführen, und für den Anfangskontakt durch die Öffnung der Aussparung zu dem Rohling bewegt wird.

13. CAD/CAM-Bearbeitungsstation nach Anspruch 12, wobei die Montagevorrichtung mindestens eine Aussparung (24) umfasst, die zu dem Rohling hin offen ist, wobei die Steuereinheit derart konfiguriert ist, dass das Schleifwerkzeug für das anfängliche Zuführen in die Aussparung eingebracht und für den Anfangskontakt durch die Öffnung der Aussparung zu dem Rohling bewegt wird.

14. CAD/CAM-Bearbeitungsstation nach Anspruch 12 oder 13, umfassend einen Speicher (15), in dem eine Position einer Aussparung gespeichert ist, wobei die Steuereinheit derart konfiguriert ist, dass das Schleifwerkzeug an der Position der Aussparung in den Rohling eintritt.

15. CAD/CAM-Bearbeitungsstation nach Anspruch 12, 13 oder 14, umfassend einen optischen Sensor (31) zum Erfassen der Position des Rohlings und/oder einer Aussparung relativ zur Montagevorrichtung, wobei die Steuereinheit derart konfiguriert ist, dass das Schleifwerkzeug an der Position der Aussparung in den Rohling eintritt.

16. CAD/CAM-Bearbeitungsstation nach einem der Ansprüche 13 bis 16, wobei der Adapter aus einem Material hergestellt ist, das weicher als der Keramikrohling ist, und insbesondere aus Holz oder einem Kunststoffmaterial hergestellt ist, wobei die Steuereinheit derart konfiguriert ist, dass das Schleifwerkzeug zum Herstellen des Kontakts zwischen dem Rohling und dem Schleifwerkzeug in den Adapter eingebracht wird.

17. CAD/CAM-Bearbeitungssystem, umfassend eine CAD/CAM-Bearbeitungsstation nach einem der Ansprüche 12 bis 16 und eine Vorrichtung (3) zum Erstellen einer CAD-Datei, die die endgültigen Abmessungen der herzustellenden keramischen Zahnprothesenteile angibt.

18. Computerprogramm, das ausführbare Programmanweisungen zur Ausführung durch die Steuereinheit einer CAD/CAM-Bearbeitungsstation nach einem der Ansprüche 12 bis 17 umfasst.

## Revendications

1. Procédé de production de pièces de prothèse dentaire en céramique au moyen d'une station d'usinage CAD/CAM (2), comprenant les étapes suivantes :
- la fourniture d'une ébauche (7) en céramique en forme de disque ;
- la fixation de l'ébauche dans un dispositif de montage (6) de la station d'usinage CAD/CAM
de telle sorte que l'ébauche est entourée sur la circonférence de celui-ci ;
- la commande de la station d'usinage CAD/CAM pour établir un contact initial entre l'ébauche et l'outil de ponçage de telle sorte que, en raison de la rotation de l'outil de ponçage autour de l'axe longitudinal (13) de celui-ci, toute la surface de contact (21) entre l'outil de ponçage et l'ébauche présente un mouvement relatif ; et
- l'usinage de l'ébauche au moyen de l'outil de ponçage rotatif, à partir du contact initial, pour produire les pièces de prothèse dentaire en céramique,
**caractérisé en ce que**
l'ébauche est fixée dans le dispositif de montage au moyen d'un adaptateur, lequel comprend au moins un évidement, lequel est ouvert vers l'ébauche, l'outil de ponçage étant introduit dans l'évidement pour alimenter l'outil de ponçage vers l'ébauche et étant déplacé vers l'ébauche à travers l'ouverture de l'évidement pour le contact initial.

2. Procédé selon la revendication 1, **caractérisé en ce que** l'ébauche présente une résistance finale.

3. Procédé selon la revendication 1 ou 2, dans lequel le dispositif de montage comprend au moins un évidement (24), lequel est ouvert vers l'ébauche, l'outil de ponçage étant introduit dans l'évidement pour alimenter l'outil de ponçage vers l'ébauche et étant déplacé vers l'ébauche à travers l'ouverture de l'évidement pour le contact initial.

4. Procédé selon l'une quelconque des revendications précédentes, dans lequel l'ébauche est fixée dans le dispositif de montage au moyen d'un adaptateur, lequel est réalisé en une matière plus souple que l'ébauche en céramique, et en particulier en bois ou en matière plastique, l'outil de ponçage étant introduit dans l'adaptateur, et l'outil de ponçage étant déplacé à travers l'adaptateur vers l'ébauche pour le contact initial avec l'ébauche.

5. Procédé selon l'une quelconque des revendications précédentes, dans lequel l'ébauche comprend au moins un évidement (28), lequel s'étend sur toute l'épaisseur de l'ébauche, l'outil de ponçage étant introduit dans l'évidement pour alimenter l'outil de ponçage vers l'ébauche et puis étant déplacé vers l'ébauche pour le contact initial.

6. Procédé selon l'une quelconque des revendications précédentes, dans lequel l'ébauche comprend au moins un évidement (24.1, 24.2) sur les côtés opposés de l'ébauche, les profondeurs des évidements en somme correspondant au moins à l'épaisseur de l'ébauche.

7. Procédé selon l'une quelconque des revendications précédentes, dans lequel le contact initial entre l'outil de ponçage et l'ébauche se déplace hors du centre de rotation de l'outil de ponçage en conséquence d'un réglage d'angle de l'ébauche en forme de disque.

8. Procédé selon la revendication 7, dans lequel un trou traversant est créé par déplacement de l'outil de ponçage dans le sens de la hauteur de l'ébauche en forme de disque.

9. Procédé selon la revendication 7 ou 8, dans lequel un trou traversant est créé par déplacement de l'outil de ponçage dans un mouvement gyroscopique à l'intérieur de l'ébauche en forme de disque.

10. Procédé selon la revendication 7, 8 ou 9, dans lequel l'outil de ponçage est déplacé avec un mouvement de balancement par rapport à l'ébauche, l'outil de ponçage étant soulevé par rapport à l'ébauche lorsqu'il passe par le centre de rotation.

11. Procédé selon l'une quelconque des revendications précédentes, dans lequel la station d'usinage CAD/CAM reçoit un fichier CAD pour les pièces de prothèse dentaire à produire, lequel spécifie les dimensions finales de la pièce de prothèse dentaire respective, et l'ébauche est usinée dans chaque cas aux dimensions finales spécifiées dans les fichiers CAD.

12. Station d'usinage CAD/CAM comprenant un dispositif de montage (6) pour une ébauche (7) en forme de disque, un outil de ponçage (12) et une unité de commande (11), lequel est conçu pour réaliser les étapes suivantes :
- la commande de la station d'usinage CAD/CAM pour établir un contact entre l'ébauche et l'outil de ponçage de telle sorte que, en raison de la rotation de l'outil de ponçage autour de l'axe longitudinal (13) de celui-ci, toute la surface de contact (21) entre l'outil de ponçage et l'ébauche présente un mouvement relatif ; et
- l'usinage de l'ébauche au moyen de l'outil de ponçage rotatif, à partir du contact initial, pour produire des pièces de prothèse dentaire en céramique,
**caractérisée en ce que**
le dispositif de montage (6) comprend un adaptateur, dans laquelle l'ébauche peut être fixée dans le dispositif de montage au moyen de l'adaptateur, lequel comprend au moins un évidement ouvert vers l'ébauche, l'outil de ponçage étant introduit dans l'évidement pour alimenter l'outil de ponçage vers l'ébauche et étant déplacé vers l'ébauche par l'ouverture de l'évidement pour le contact initial.

13. Station d'usinage CAD/CAM selon la revendication 12, dans laquelle le dispositif de montage comprend au moins un évidement (24), lequel est ouvert vers l'ébauche, l'unité de commande étant conçue de telle sorte que l'outil de ponçage est introduit dans l'évidement pour l'alimentation initiale et déplacé vers l'ébauche par l'ouverture de l'évidement pour le contact initial.

14. Station d'usinage CAD/CAM selon la revendication 12 ou 13, comprenant une mémoire (15) dans laquelle une position d'un évidement est mémorisée, l'unité de commande étant conçue de telle sorte que l'outil de ponçage entre dans l'ébauche au niveau de la position de l'évidement.

15. Station d'usinage CAD/CAM selon la revendication 12, 13 ou 14, comprenant un capteur optique (31) pour détecter la position de l'ébauche et/ou un évidement par rapport au dispositif de montage, l'unité de commande étant conçue de telle sorte que l'outil de ponçage entre dans l'ébauche au niveau la position de l'évidement.

16. Station d'usinage CAD/CAM selon l'une quelconque des revendications 13 à 16, dans laquelle l'adaptateur est réalisé en une matière plus souple que l'ébauche en céramique, et en particulier en bois ou en matière plastique, l'unité de commande étant conçue de telle sorte que l'outil de ponçage entre dans l'adaptateur pour établir le contact entre l'ébauche et l'outil de ponçage.

17. Système d'usinage CAD/CAM comprenant une station d'usinage CAD/CAM selon l'une quelconque des revendications 12 à 16 et un dispositif (3) permettant de générer un fichier CAD, lequel spécifie les dimensions finales des pièces de prothèse dentaire en céramique à produire.

18. Programme informatique comprenant des instructions de programme exécutables à exécuter par l'unité de commande d'une station d'usinage CAD/CAM selon l'une quelconque des revendications 12 à 17.
